# EUROPÄISCHE PATENTSCHRIFT

(11) **EP 4 147 786 B1**
(45) Veröffentlichungstag und Bekanntmachung des Hinweises auf die Patenterteilung: **15.05.2024**
(21) Anmeldenummer: 21195611.5
(22) Anmeldetag: 08.09.2021
(51) Int. Cl.: B05B 1/00

(54) **AGRARSPRITZEN-VENTILEINHEIT UND AGRARSPRITZEINRICHTUNG**
AGRICULTURAL SPRAYING VALVE UNIT AND AN AGRICULTURAL SPRAYING DEVICE
UNITÉ DE SOUPAPE DE PULVÉRISATION AGRICOLE ET DISPOSITIF DE PULVÉRISATION AGRICOLE

(43) Veröffentlichungstag der Anmeldung: 15.03.2023
(73) Patentinhaber: Schulte, Reinhold, 33106 Paderborn (DE)
(72) Erfinder: Schulte, Reinhold, 33106 Paderborn (DE)
(74) Vertreter: REHBERG HÜPPE + PARTNER

(56) Entgegenhaltungen:
- WO-A1-2018/108564
- WO-A1-2020/035443
- US-A- 4 359 204

## Beschreibung

### TECHNISCHES GEBIET DER ERFINDUNG

Die vorliegende Erfindung betrifft eine Agrarspritzen-Ventileinheit. Des Weiteren betrifft die Erfindung eine Agrarspritzeinrichtung mit mehreren Agrarspritzen-Ventileinheiten.

Agrarspritzen-Ventileinheiten dienen der Steuerung oder Regelung (im Rahmen der vorliegenden Erfindung auch unter "Steuerung" subsumiert) der Ausbringung eines Fluids mittels einer Agrarspritze beliebigen Einsatzzwecks und beliebiger Bauart. Beispielsweise dient eine derartige Agrarspritze dem Ausbringen eines Fluids in der Landwirtschaft oder dem Obst- oder Gemüseanbau, wobei es sich bei dem Fluid beispielsweise um Wasser, Dünger, eine Insektizid, ein Unkrautvernichtungsmittel oder ein beliebiges anderes Fluid oder Fluidgemisch handeln kann.

### STAND DER TECHNIK

Agrarspritzen finden Einsatz einzeln zur Ausbringung eines agraren Fluids auf eine begrenzte Fläche oder mit einer Vielzahl von Agrarspritzen, die beispielsweise nebeneinander an einem oder mehreren Sprühbalken eines landwirtschaftlichen Fahrzeugs gehalten sein können. Insbesondere aus Kostengründen sowie ökologischen Gründen soll das Ausbringen des Fluids nur in den tatsächlich relevanten agraren Flächen und auch hier nur mit einem erforderlichen Volumenstrom erfolgen. Um lediglich ein Beispiel zu nennen, soll bei einem Sprühfahrzeug, welches sich mäanderförmig über ein Feld bewegt, die Ausbringung des Fluids in den Randbereichen des Feldes, beispielsweise bei einer Kurvenfahrt, unterbrochen werden. Möglich ist auch, dass in Teilbreiten des Sprühbalkens, die keine Pflanzen oder kein Erntegut überfahren, die diesen Teilbreiten zugeordneten Agrarspritzen temporär abgeschaltet werden sollen. Während für die vollständige Abschaltung in dem Randbereich eines Feldes eine zentrale Agrarspritzen-Ventileinheit in einer Zuführleitung zu sämtlichen Agrarspritzen in eine Sperrstellung verbracht werden kann, erfordert die Deaktivierung von Teilbreiten eines Sprühbalkens, das eine Zentralleitung des Sprühbalkens, an welche die Agrarspritzen angeschlossen sind, segmentiert ausgebildet ist mit parallelen Segmenten, die separat über den jeweiligen Segmenten zugeordnete Agrarspritzen-Ventileinheiten absperrbar sind. Schließlich kann eine Ansteuerung einer Agrarspritzen-Ventileinheit auch zusätzlich zu einer Öffnungsstellung und einer Schließstellung in zumindest eine Zwischenstellung, insbesondere kontinuierliche Zwischenstellungen, erfolgen, um die Ausbringung bedarfsgerecht (in Stufen oder stufenlos) steuern zu können.

Mit modernen Agrarspritzen verbundene Problemstellungen sowie Lösungsansätze sind den Druckschriften DE 10 2009 001 532 A1 sowie DE 696 25 914 T2 zu entnehmen. Demgemäß kann eine Veränderung einer Ausbringrate mit erforderlichen Zwischenstellungen der Agrarspritzen-Ventileinheit wünschenswert sein je nach agrarem Einsatzzweck, einer erwarteten Drift von Sprühtropfen in Folge eines Windes, der Geschwindigkeit des Sprühfahrzeugs, der gewünschten Größe des Sprühbereichs der Agrarspritze, der Höhe eines Sprühbalkens über dem Boden, einer gewünschten Tropfengröße oder einem gewünschten Spektrum der Tropfengrößen, dem gewünschten fluidischen Fluss, einem gewünschten Winkel eines Sprühkegels u. ä. Möglich ist auch, dass eine Steuerung der Ausbringrate auf Grundlage von Informationen eines Global-Positioning-Systems erfolgen soll, indem beispielsweise je nach Position auf dem Feld der Volumenstrom der Ausbringung vorgegeben ist, beispielsweise auf Grundlage von positionsbezogenen Erntedaten der letzten Ernte.

Bekannt ist auch eine Beeinflussung eines Volumenstroms für die Ausbringung des agraren Fluids über eine Steuerung der Förderleistung einer Pumpe für die Zuführung des Fluids, eine Steuerung des Druckes in einer Zuführleitung, eine Beeinflussung eines Öffnungs-Querschnitts einer Agrarspritzen-Ventileinheit oder einen Einsatz einer Agrarspritzen-Ventileinheit in Ausbildung als pulsmoduliertes System (vgl. DE 10 2009 001 532 A1 und DE 696 25 914 T2), wobei im letztgenannten Fall über den sogenannten "Duty Cycle" und das Verhältnis der kurzfristigen Öffnungszeiten des Ventils zu Schließzeiten des Ventils der zeitlich gemittelte Volumenstrom variiert werden kann. Eine Wechselwirkung der Ausbringung besteht auch zwischen der Agrarspritzen-Ventileinheit einerseits und einer der Agrarspritzen-Ventileinheit nach geschalteten Spritz- oder Düseneinheit, aus welcher das Fluid in Richtung des Ackerbodens oder des mit dem Fluid zu benetzenden Guts austritt.

Agrarspritzen-Ventileinheiten können als direkt gesteuerte Magnetventile ausgebildet sein, bei welchen beispielsweise ein als Ventilteller ausgebildeter Ventilkörper, der in einer Schließstellung zur Anlage an einen Ventilsitz kommt, mit einem elektromagnetischen Aktuator direkt mechanisch verbunden ist. Hierbei sind die elektromagnetischen Aktuatoren mit einer Spule und einem im Inneren der Spule bewegten Anker gebildet, wobei der bewegliche Anker mit dem Ventilkörper gekoppelt ist. Der elektromagnetische Aktuator muss eine Öffnungskraft erzeugen, die abhängig ist von der Größe des Ventiltellers sowie der Druckdifferenz zwischen einer Primärleitung und einer Sekundärleitung der Agrarspritzen-Ventileinheit (vgl. DE 10 2013 101 460 A1).

DE 10 2011 000 921 B3 offenbart eine Agrarspritzen-Ventileinheit, welche als passives Überströmventil ohne elektronische Steuerungsmöglichkeiten ausgebildet ist. Hierbei ist die Größe und Geometrie eines Übertrittsquerschnitts zwischen der Primärleitung und der Sekundärleitung abhängig von der Stellung eines Ventilkörpers. Der Ventilkörper ist in diesem Fall ein Wiegekolben. Der Wiegekolben weist eine erste Kolbenfläche auf, die permanent mit dem Druck in der Primärleitung beaufschlagt ist. Des Weiteren besitzt der Wiegekolben eine entgegengesetzt zu der ersten Kolbenfläche wirkende zweite Kolbenfläche, welche permanent mit dem Druck in Sekundärleitung beaufschlagt ist. Somit ist die Stellung des Ventilkörpers und die Größe und Geometrie des Übertrittquerschnitts von der Druckdifferenz in der Primärleitung und der Sekundärleitung abhängig. Für die Inbetriebnahme einer Agrarspritze liegt in der Sekundärleitung kein Druck an, so dass sich mit einem Druckaufbau in der Primärleitung eine schnelle Öffnung der Agrarspritzen-Ventileinheit ergibt. Kommt es hingegen im Betrieb der Agrarspritze zu einer unerwünschten Verstopfung stromabwärts der Agrarspritzen-Ventileinheit, staut sich das Fluid in der Sekundärleitung auf, womit der die zweite Kolbenfläche beaufschlagende Druck sich dem Druck in der Primärleitung, welcher die erste Kolbenfläche beaufschlagt, annähert. Auf diese Weise kann bei einer Verstopfung automatisch eine Schließung des Agrarspritzen-Überströmventils herbeigeführt werden, um einen weiteren Übertritt von Fluid von der Primärleitung in die Sekundärleitung zu unterbinden.

EP 2 227 949 A1 offenbart den grundsätzlichen Aufbau einer Feldspritzanlage mit dem gesamten fluidischen Kreis und der Anordnung mehrerer Agrarspritzen-Ventileinheiten an einem Sprühbalken. Hier finden Agrarspritzen-Ventileinheiten mit einer pulsweitenmodulierten Steuerung der Bewegung eines Ventilkörpers Einsatz.

EP 2 979 765 B1 offenbart eine Agrarspritzen-Ventileinheit, bei welcher zwischen einer Primärleitung und einer Sekundärleitung ein Ventil angeordnet ist. Das Ventil weist einen Ventilkörper und einen Ventilsitz auf, die in einer Öffnungsstellung des Ventils einen Übertrittsquerschnitt zwischen der Primärleitung und der Sekundärleitung bilden. Der Ventilkörper ist über eine Feder in Richtung einer Schließstellung und in Richtung des Ventilsitzes beaufschlagt. Auf den Ventilkörper wirkt der Druck in der Primärleitung in Öffnungsrichtung. Das Ventil bildet ein Überströmventil, in dem mit einem Überschreiten eines Schwellwerts des Drucks in der Primärleitung der Ventilkörper von dem Ventilsitz weg bewegt wird. Somit wird das Ventil erst geöffnet, wenn mit Aufnahme der Tätigkeit einer Pumpe der Schwellwert des Drucks erreicht ist. Neben dieser passiven Überströmfunktion des Ventils kann der Ventilkörper über einen Haftmagneten in der Schließstellung gehalten werden. Im Rahmen der vorliegenden Patentanmeldung wird unter einem Haftmagneten ein Elektromagnet verstanden, in welchem keine mechanische Bewegungsumsetzung erfolgt. Vielmehr verfügt der elektrische Haftmagnet über eine Spulenwicklung und einen gegenüber der Spulenwicklung nicht bewegbaren Kern. In der Richtlinie VDE 0580 sind derartige Haftmagnete auch als "Lasthebemagnete" bezeichnet. Einsatz findet hier ein Haftmagnet in Ausbildung als rotationssymmetrischer Topfmagnet. Ein Halten des Ventils mittels des Haftmagneten ist mit einer drastisch reduzierten Leistungsaufnahme gegenüber einem Elektromagneten mit im Inneren angeordneten beweglichen Anker möglich, wobei unter Umständen dennoch hohe Haltekräfte herbeigeführt werden können. Wird mittels des Haftmagneten der Ventilkörper in der Schließstellung gehalten, kann durch den Haftmagneten die Überströmfunktion außer Kraft gesetzt werden, so dass trotz Überschreiten des Schwellwerts des Drucks in der Primärleitung das Ventil die Schließstellung beibehält. Dies soll beispielsweise genutzt werden, um durch Bestromung einzelner Haftmagnete von mehreren Agrarspritzen-Ventileinheiten an einem Sprühbalken eine Teilbreitenabschaltung herbeizuführen oder mit Bestromung sämtlicher Haftmagneten der Agrarspritzen-Ventileinheit temporär das Ausbringen für den gesamten Sprühbalken, beispielsweise bei einer Kurvenfahrt im Randbereich des Feldes, zu unterbinden. Alternativ wird vorgeschlagen, dass der Haftmagnet eine Öffnungsstellung des Ventilkörpers sichert, womit die Überströmfunktion mit Bestromung des Haftmagneten auch ausgelöst werden kann, wenn die Druckdifferenz zwischen dem Druck in der Primärleitung und der Sekundärleitung nicht ausreichend ist, um das Ventil in die Öffnungsstellung zu überführen. Wirkt der Haftmagnet mit einem Anker zusammen, der mit dem Ventilkörper gekoppelt ist, ändert sich je nach Stellung des Ventilkörpers und damit des Abstandes des Ankers von dem Haftmagneten die magnetische Leitfähigkeit, der magnetische Widerstand und die Flussdichte. Bei Beaufschlagung des Haftmagneten mit einer Wechselspannung oder einem Wechselstrom ändern sich damit die Stromverläufe, die Spannung, die Impedanz und/oder eine Fasenverschiebung der elektrischen Beaufschlagung des Haftmagneten. Anhand der physikalischen Gegebenheiten kann dann eine Veränderung umgerechnet werden oder über ein Kennfeld umgewandelt werden in einen Abstand des Ankers von dem Haftmagneten, womit eine Art Sensor geschaffen ist für die Betriebsstellung des Ventilkörpers und damit die Betriebsstellung des Ventils. Hierbei kann der Sensor ein binäres Signal (geschlossen/offen), ein digitales Signal oder auch ein analoges Signal für den Abstand des Ankers von dem Haftmagneten erzeugen. Auf Grundlage der Auswertung des derart ermittelten Abstandes des Ankers von dem Haftmagneten kann dann eine Erkennung eines fehlerhaften Betriebszustandes der Agrarspritze, für welche das Ventil Einsatz findet, erfolgen. Beispielsweise kann ein Einbruch des Drucks in der Primärleitung (insbesondere infolge einer Fehlfunktion einer Pumpe oder einer Leckage in der Zuleitung) detektiert werden. Möglich ist auch, dass über den Sensor eine Verstopfung in der Agrarspritze, insbesondere im Bereich der Sekundärleitung oder im Bereich einer Spritz- oder Ausbringdüse, erkannt wird. Möglich ist auch, dass eine Behinderung einer Bewegung des Ventilkörpers, beispielsweise infolge eines Verschleißes oder eines Fremdkörpers im Führungsbereich des Ventilkörpers oder zwischen dem Ventilsitz und dem Ventilkörper, erkannt wird. Vorgeschlagen wird in EP 2 979 765 B1 des Weiteren, dass ein nicht stationäres elektrisches Testsignal erzeugt wird, mit dem der Haftmagnet beaufschlagt wird, wobei das Testsignal so von einer Steuereinheit vorgegeben wird, dass eine möglichst gute Messung des Abstandes des Ankers von dem Haftmagneten möglich ist. Dieses elektrische Testsignal kann beispielsweise in der Haftstellung des Ankers appliziert werden, in welcher der Anker ohnehin mit einer verhältnismäßig großen Haft- oder Haltekraft an dem Haftmagneten gehalten ist, so dass eine kleine oszillierende Kraft infolge des elektrischen Testsignals nicht so an dem Lösen des Ankers von dem Haftmagneten führt. Möglich ist auch, dass das Testsignal dem ansonsten genutzten elektrischen Beaufschlagungssignal des Haftmagneten überlagert wird, wobei die Amplitude des elektrischen Testsignals kleiner ist als die des elektrischen Beaufschlagungssignals. Alternativ oder zusätzlich wird vorgeschlagen, dass das Testsignal eine derartige Frequenz besitzt, dass zwar das Testsignal einen Fluss durch den Haftmagneten und den Anker bewirkt, welcher abhängig ist von dem Abstand des Ankers von dem Haftmagneten. Allerdings ist infolge der Trägheit des Ankers und des Ventilkörpers das Ventil nicht in der Lage, entsprechend dem hochfrequenten Testsignal und der hierdurch erzeugten hochfrequenten Kraft des Haftmagneten eine signifikante Änderung oder Oszillation der Stellung des Ventilkörpers herbeizuführen.

Die Druckschrift WO 2020/035443 A1**,** die den nächstliegenden Stand der Technik bildet, offenbart eine Agrarspritzen-Ventileinheit, bei der die Primärleitung über eine Reihenschaltung eines passiven Überströmventils und eines elektronisch mittels eines Haftmagneten gesteuerten Steuerventils mit einer Sekundärleitung verbunden ist. Das Steuerventil nimmt ohne elektrische Beaufschlagung des Haftmagneten die Öffnungsstellung ein. In der Schließstellung des Überströmventils beaufschlagt der Druck in der Primärleitung eine kleinere Ventilfläche als in einer Öffnungsstellung des Überströmventils. Das Überströmventil und das Steuerventil sind radial ineinander geschachtelt. In einer Agrarspritze findet die Agrarspritzen-Ventileinheit mit einer Steuereinheit Einsatz, die aus der elektrischen Beaufschlagung des Haftmagneten eine Kenngröße ermittelt, die mit einem Durchfluss und/oder einem Ausmaß einer Verstopfung korreliert. Die Steuerlogik steuert den Haftmagneten mittels einer Pulsweitenmodulation an, wobei aus den elektrischen Kenngrößen der Pulsweitenmodulation die Kenngröße für den Durchfluss und das Ausmaß der Verstopfung erkannt werden kann.

### AUFGABE DER ERFINDUNG

Der Erfindung liegt die Aufgabe zugrunde, eine Agrarspritzen-Ventileinheit vorzuschlagen, welche hinsichtlich
- der Montage und/oder
- der Anforderungen an die Toleranzen und/oder
- des Verschleißes und/oder
- der Dichtwirkung
verbessert ist. Des Weiteren der Erfindung die Aufgabe zugrunde, eine entsprechend verbesserte Agrarspritzeinrichtung vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung schlägt eine Agrarspritzen-Ventileinheit vor, die über eine Primärleitung und eine Sekundärleitung verfügt. Zwischen der Primärleitung und der Sekundärleitung ist ein Steuerventil angeordnet. Das Steuerventil weist einen gehäusefesten (also im Betrieb der Agrarspritzen-Ventileinheit nicht bewegten) Ventilsitz und einen im Betrieb der Agrarspritzen-Ventileinheit bewegten Ventilkörper auf. Der Ventilkörper bildet in einer Öffnungsstellung einen Übertrittsquerschnitt mit dem Ventilsitz aus, über den ein Übertritt von Fluid von der Primärleitung zu der Sekundärleitung möglich ist. Hingegen schließt der Ventilkörper in einer Schließstellung den Ventilsitz, so dass kein Übertrittsquerschnitt mehr zwischen dem Ventilkörper und dem Ventilsitz vorhanden ist und kein Übertritt von Fluid von der Primärleitung zu der Sekundärleitung möglich ist. Der Ventilkörper kann auch Zwischenstellungen zwischen der Öffnungsstellung und der Schließstellung einnehmen, in denen sich ein Übertrittsquerschnitt mit einer verringerten Querschnittsfläche ergibt.

Die erfindungsgemäße Agrarspritzen-Ventileinheit verfügt des Weiteren über einen elektronisch gesteuerten Haftmagneten, über welchen eine Veränderung der Betriebsstellung des Ventilkörpers herbeigeführt werden kann und/oder eine Betriebsstellung des Ventilkörpers aufrechterhalten werden kann. Mit der elektronischen Steuerung des Haftmagneten kann somit eine Steuerung der Querschnittsfläche des Übertrittsquerschnitts und/oder die Herbeiführung und/oder Aufrechterhaltung einer Öffnungsstellung und einer Schließstellung erfolgen.

Insoweit kann die erfindungsgemäße Agrarspritzen-Ventileinheit der Agrarspritzen-Ventileinheit gemäß WO 2020/035443 A1 (im Folgenden "die bekannte Agrarspritzen-Ventileinheit") entsprechen. In der bekannten Agrarspritzen-Ventileinheit gemäß WO 2020/035443 A1 ist der Ventilkörper als Ventilteller ausgebildet, der mechanisch über einen Ventilstößel mit dem Anker des Haftmagneten gekoppelt ist. In der bekannten Agrarspritzen-Ventileinheit verfügt der Ventilteller über eine Umfangsnut, in welcher ein Dichtelement angeordnet ist. Dieses Dichtelement kommt in der Schließstellung des Steuerventils zur Anlage an eine entsprechende Ringfläche des Ventilsitzes. Die vorliegende Erfindung basiert auf der Erkenntnis, dass bei der Auslegung des Dichtelements der bekannten Agrarspritzen-Ventileinheit der folgende Zielkonflikt zu lösen ist:
a) Einerseits erfordert die Herbeiführung der angestrebten Dichtwirkung, dass das Dichtelement möglichst weich ist, um eine vollflächige Anlage des Dichtelements an die ringförmige Dichtfläche des Ventilsitzes zu gewährleisten. Eine kleine Steifigkeit des Dichtelements kann dann beispielsweise dazu genutzt werden, um Unebenheiten der Dichtfläche durch entsprechend unterschiedliche Verformungen des Dichtelements auszugleichen. Hinzu kommt, dass mittels eines weichen Dichtelements auch andere Fertigungsungenauigkeiten wie beispielsweise auch geringfügige Winkelfehler zwischen dem Dichtsitz und dem Ventilkörper ausgeglichen werden können. Schließlich erfordert die angestrebte Wirkung des Haftmagneten, dass in der Haftstellung der Anker des Haftmagneten eine exakte Position einnimmt, nämlich an dem Haftmagneten anliegt. Fertigungstoleranzen des Betätigungsstößels und des Ventilkörpers einerseits sowie der Komponenten, mittels welchen die axiale Lage des Ventilsitzes vorgegeben wird, andererseits führen dazu, dass sich bei Anlage des Ankers an dem Haftmagneten unterschiedliche Relativstellungen zwischen dem Ventilsitz und dem Ventilkörper ergeben. Trotz dieser toleranzbedingten unterschiedlichen Relativstellungen muss aber für die Anlage des Ankers an dem Haftmagneten gewährleistet sein, dass das Steuerventil in seiner Schließstellung ist. Hier schafft ein weiches Dichtelement eine Ausgleichsmöglichkeit für die unterschiedlichen toleranzbedingten Relativstellungen, indem das Dichtelement für die unterschiedlichen Relativstellungen in unterschiedlichem Ausmaß elastisch komprimiert sein kann, aber dennoch die Abdichtung gewährleistet.
   Die vorgenannten Kriterien sprechen somit dafür, dass das Dichtelement möglichst weich auszubilden ist.
b) Andererseits kann die weiche Ausbildung des Dichtelements dazu führen, dass sich eine verringerte Beständigkeit des Dichtelements und damit eine verringerte Laufzeit der Agrarspritzen-Ventileinheit ergibt, da das weiche Dichtelement infolge des wiederholten, unter Umständen stoßförmigen Kontaktes mit dem Ventilsitz verschleißen kann. Des Weiteren wird das Dichtelement im Bereich des Übertrittsquerschnitts mit unter Umständen großen Strömungsgeschwindigkeiten des Fluids zusätzlich beansprucht, was ebenfalls zu einem strömungsbedingten Verschleiß führen kann. Schließlich schränkt auch eine weiche Ausbildung des Dichtelements die Materialwahl für das Dichtelement ein, womit unter Umständen auch Materialien ausgeschlossen werden, die eine große Beständigkeit gegenüber einem unter Umständen chemisch aggressiven Fluid aufweisen können. Möglich ist auch, dass durch den Einsatz eines Dichtelements mit einer hohen Steifigkeit die dynamischen Eigenschaften der Agrarspritzen-Ventileinheit verbessert werden können. Die vorgenannten Kriterien können dazu führen, dass der Einsatz eines Dichtkörpers mit einer hohen Steifigkeit gewünscht ist.

In diesem Zielkonflikt schlägt die Erfindung vor, zunächst einen Ventilkörper einzusetzen, der als Dichtkörper ausgebildet ist, der aus Kunststoff hergestellt ist. Dieser Dichtkörper kann spezifisch angepasst sein an die Verschleißfestigkeit, wobei der Dichtkörper dann auch eine verhältnismäßig hohe Steifigkeit und Härte aufweisen kann. Erfindungsgemäß ist in dem Kraftfluss zwischen einem Anker des Haftmagneten und dem Dichtkörper ein Federelement angeordnet. Die Steifigkeit des Federelements ist kleiner als die Steifigkeit des Ventilkörpers. Mittels dieses Federelements kann eine Kompensation der Fertigungstoleranzen erfolgen, indem das Federelement je nach den Fertigungsdimensionen mehr oder weniger komprimiert wird. Die Erfindung basiert somit auf dem Grundgedanken, die Funktionen zu trennen, indem der Dichtkörper, der mit dem Ventilsitz in Wechselwirkung tritt, steif und verschleißfest ausgebildet ist, während das in dem Kraftfluss angeordnete Federelement als Kompensationselement für Fertigungsungenauigkeiten dient.

Im Rahmen der Erfindung kann das Federelement an beliebiger Stelle in dem Kraftfluss zwischen dem Anker, dem Ventilstößel und dem Ventilkörper angeordnet sein. Um lediglich ein Beispiel zu nennen, kann der Anker über ein Federelement mit dem Ventilstößel gekoppelt sein, der Ventilstößel selbst einen zumindest in axialer Richtung elastischen Teilabschnitt oder ein integriertes Federelement aufweisen oder das Federelement befindet sich in der Verbindungsstelle des Ventilstößels mit dem Ventilkörper. Für einen besonderen Vorschlag der Erfindung ist das Federelement zwischen dem Ventilkörper und einem Betätigungskörper, der mechanisch mit dem Anker des Haftmagneten verbunden ist, angeordnet. In diesem Fall ist ein Federfußpunkt des Federelements an dem Ventilkörper abgestützt und der andere Federfußpunkt des Ventilkörpers ist an dem Betätigungskörper abgestützt.

Grundsätzlich können für den Kunststoff, aus dem der als Dichtkörper ausgebildete Ventilkörper hergestellt ist, beliebige Kunststoffe eingesetzt werden. Für einen Vorschlag der Erfindung findet eine Herstellung des Ventilkörpers aus Polyethylen oder PTFE statt. Hierbei kann das Material des Ventilkörpers eine Härte aufweisen, die bei Normbedingungen mindestens 55 Shore D (insbesondere mindestens 58 Shore D oder mindestens 60 Shore D) beträgt.

Grundsätzlich möglich ist, dass das Federelement ausschließlich die erläuterten elastischen Eigenschaften bereitstellt. Für einen Vorschlag der Erfindung ist das Federelement multifunktional, indem dieses auch als Dichtelement wirkt. Das Federelement kann in diesem Fall den Ventilkörper gegenüber dem Betätigungskörper abdichten. Damit ist das Federelement auch an der Gewährleistung der Schließstellung und der Vermeidung eines Übertritts von Fluid von der Primärleitung zu der Sekundärleitung über einen etwaigen Leckage- oder Übertrittskanal zwischen dem Ventilkörper und dem Betätigungskörper beteiligt.

Für die konstruktive Ausgestaltung des Feder- und/oder Dichtelements gibt es im Rahmen der Erfindung vielfältige Möglichkeiten. Für einen Vorschlag der Erfindung ist das Feder- und/oder Dichtelement als O-Ring ausgebildet, der die erläuterten Funktionen erfüllen kann und kommerziell zu günstigen Preisen in einer Vielfalt von Abmessungen, einer Vielfalt von Steifigkeiten, einer Vielfalt von Materialien und einer Vielfalt von chemischen Beständigkeiten verfügbar ist.

Für einen Vorschlag der Erfindung ist der O-Ring aus einem Elastomermaterial, Santopren (eingetragene Marke) oder Polypropylen hergestellt. Um lediglich ein die Erfindung nicht beschränkendes Beispiel zu nennen, kann der O-Ring eine Härte aufweisen, die mindestens 55 Shore A (insbesondere mindestens 57 Shore A oder mindestens 58 Shore A oder 60 Shore A) beträgt. Bei dem Material Santopren (eingetragene Marke) handelt es sich vorzugsweise um ein TPV, welches Bestandteil der Polymerfamilie TPE ist.

Ein weiterer Aspekt der Erfindung betrifft einen Vorschlag für die geometrische Gestaltung des Betätigungskörpers und des Ventilkörpers: In einem Halblängsschnitt weist der Betätigungskörper einen radialen Vorsprung auf, der vorzugsweise einen umlaufenden Ringbund oder -kragen bildet. Der Ventilkörper umgreift in diesem Fall den radialen Vorsprung im Halblängsschnitt U-förmig. Vorzugsweise ist die U-Form ebenfalls in Umfangsrichtung umlaufend ausgebildet. Der Grundschenkel des U ist dann radial außenliegend von dem Vorsprung angeordnet. Der radiale Vorsprung ist axial zwischen den beiden Seitenschenkeln des U gefangen. Das Feder- und/oder Dichtelement ist zwischen einem Seitenschenkel und dem radialen Vorsprung angeordnet, wobei dieses auch zwischen dem radialen Vorsprung und dem Seitenschenkel vorgespannt sein kann.

Vorzugsweise ist der Ventilkörper unter elastischer Verformung insbesondere des Grundschenkels oder eines Seitenschenkels des U mit dem Betätigungskörper montierbar. Hierbei ist es vorteilhaft, wenn ein Seitenschenkel des U im Endbereich eine Montageschräge aufweist. In diesem Fall ist die Montageschräge mit einem spitzen Winkel gegenüber der Längsachse geneigt. Wird dieser Seitenschenkel für die Montage an den Vorsprung des Betätigungskörpers angenähert und an diesen angepresst, wandelt die Montageschräge eine Montagekraft um in eine radial nach außen orientierte Kraft, die den Seitenschenkel elastisch nach außen verformt. Für eine hinreichende Montagekraft kann der Seitenschenkel somit den Vorsprung passieren und hinter dem Vorsprung wieder in seine entspannte Ausgangslage "zurückschnappen", so dass die Verbindung und axiale Sicherung des Ventilkörpers gegenüber dem Vorsprung des Betätigungskörpers als eine Art Rast- oder Schnappverbindung bezeichnet werden kann. In dem montierten Zustand ist dann der Vorsprung des Betätigungskörpers zwischen den Seitenschenkeln des Ventilkörpers axial gefangen.

In weiterer Ausgestaltung der Erfindung ist der Betätigungskörper über einen Ventilstößel mechanisch mit dem Anker des Haftmagneten verbunden. Im einfachsten Fall erfolgt dies, indem der Betätigungskörper fest mit dem Ventilstößel verbunden ist und der Ventilstößel wiederum fest mit dem Anker des Haftmagneten verbunden ist. Durchaus möglich ist aber auch, dass hier weitere Übertragungselemente zwischengeordnet sind. Für diese Ausführungsformen ist der Anker über eine Membran gegenüber (mindestens) einem Gehäuseteil abgedichtet. Die Membran kann dann die Agrarspritzen-Ventileinheit (gemeinsam mit dem Gehäuseteil) unterteilen in einen Ventilteil, der mit dem Fluid und den wirkenden Drücken beaufschlagt ist, sowie einen anderen Ventilteil, in welchen das Fluid nicht gelangt. Vorzugsweise befinden sich in dem anderen Teil der Anker und der Haftmagnet. Die mechanische Kopplung der beiden Ventilteile erfolgt dann über den Ventilstößel, der die Membran und das Gehäuseteil durchsetzt.

Für die Verbindung der Membran mit dem Ventilstößel gibt es im Rahmen der Erfindung vielfältige Möglichkeiten. Für einen Vorschlag der Erfindung bildet die Membran radial innenliegend eine Verbindungshülse aus. Die Verbindungshülse ist auf den Ventilstößel aufgeschoben. Ein Klemmkörper nimmt innenliegend die Verbindungshülse auf. Der Klemmkörper verspannt die Verbindungshülse radial zwischen dem Klemmkörper und dem Ventilstößel. Eine derartige Verbindung hat sich einerseits als zuverlässig herausgestellt. Andererseits führt diese Verbindungstechnik zu einer kompakt bauenden Verbindung mit einer geringen Zahl von Teilen, die einfach herzustellen ist.

Eine weitere Lösung der der Erfindung zugrunde liegenden Aufgabe stellt eine Agrarspritzeinrichtung dar. Diese Agrarspritzeinrichtung verfügt über mehrere Agrarspritzen-Ventileinheiten, wie diese zuvor erläutert worden sind. Die Agrarspritzen-Ventileinheiten sind jeweils einer Ausbringdüse zugeordnet, über welche ein Ausbringen des Fluids, insbesondere mit einem Sprühkegel, erfolgt. Die Agrarspritzen-Ventileinheiten und die zugeordneten Ausbringdüsen sind dabei an einem Sprühbalken eines landwirtschaftlichen Fahrzeugs, insbesondere Traktors, gehalten. Die Agrarspritzen-Ventileinheiten werden über eine Pumpe mit einem auszubringenden Fluid versorgt. Die Agrarspritzeinrichtung verfügt über mindestens eine elektronische Steuereinheit, die mindestens eine Agrarspritzen-Ventileinheit ansteuert. Hierbei kann es sich um eine zentrale Steuereinheit und/oder lokale, den Agrarspritzen-Ventileinheiten zugeordnete oder in diese integrierte Steuereinheiten handeln. Eine zentrale Steuereinheit kann dabei auch als Master-Steuereinheit ausgebildet sein, die den Betrieb der den Agrarspritzen-Ventileinheiten zugeordneten Steuereinheiten koordiniert.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einem Teillängsschnitt eine Agrarspritzen-Ventileinheit in einer Schließstellung eines Überströmventils und eines Steuerventils.
- **Fig. 2**: zeigt in einem Fig. 1 entsprechenden Teillängsschnitt die Agrarspritzen-Ventileinheit in einer Öffnungsstellung des Überströmventils und des Steuerventils.
- **Fig. 3**: zeigt in einem Detail des Längsschnitts gemäß Fig. 1 das Steuerventil der Agrarspritzen-Ventileinheit in der Schließstellung.
- **Fig. 4**: zeigt in einem Fig. 3 entsprechenden Detail das Steuerventil in der Öffnungsstellung.
- **Fig. 5**: zeigt in einem Detail des Teillängsschnitts gemäß Fig. 1 eine zwischen einem Gehäuseteil und einem Ventilstößel wirksame Membran.

### FIGURENBESCHREIBUNG

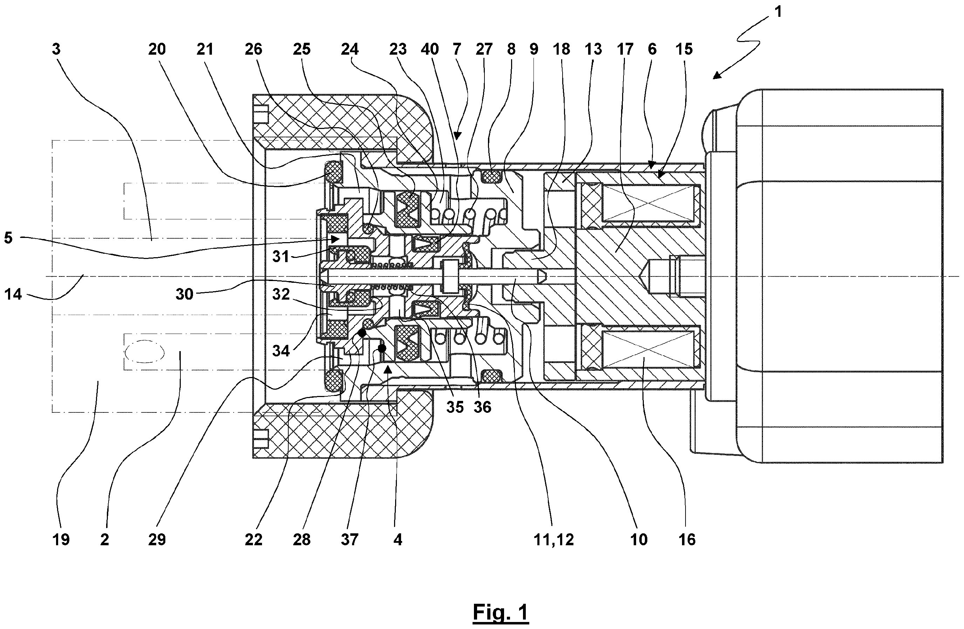

**Fig. 1** zeigt eine Agrarspritzen-Ventileinheit 1. Die Agrarspritzen-Ventileinheit weist eine Primärleitung 2 und eine Sekundärleitung 3 auf. Die Primärleitung 2 kann über einen Anschluss (hier nicht dargestellt) mit einer unter Druck stehenden Versorgungsquelle für ein agrares Fluid, insbesondere eine Pumpe, verbunden. Die Sekundärleitung 3 ist an eine Ausbringdüse einer Agrarspritze angeschlossen, über welche das agrare Fluid, insbesondere mit einem Sprühkegel, auf eine agrare Fläche ausgebracht wird. Die Agrarspritzen-Ventileinheit 1 steuert (worunter auch eine Regelung zu verstehen ist) den Übertritt des Fluids von der Primärleitung 2 zu der Sekundärleitung 3 entsprechend dem jeweiligen Bedarf an auszubringendem Fluid.

In der Agrarspritzen-Ventileinheit sind zwischen die Primärleitung 2 und die Sekundärleitung 3 in fluidischer Reihenschaltung in dieser Reihenfolge ein Überströmventil 4 und ein Steuerventil 5 zwischengeschaltet. Das Überströmventil 4 ist als passives fluidgesteuertes Ventil ausgebildet, während das Steuerventil 5 ein aktiv elektronisch gesteuertes Ventil ist.

Die Agrarspritzen-Ventileinheit 1 ist unterteilt in einen elektronisch gesteuerten Ventilteil 6 und einen Ventilteil 7, der von dem Fluid durchströmt ist und in dem das Überströmventil 4 und das Steuerventil 5 angeordnet sind. Das Ventilteil 6 und das Ventilteil 7 sind unter fluidischer Abdichtung mittels eines Dichtelements 8, mittels eines Gehäuseteils 9, eines Ventilstößels 10 und ein die Abdichtung zwischen dem Ventilstößel 10 und dem Gehäuseteil 9 gewährleistendes Dichtelement 11, welches hier als Membran 12 ausgebildet ist, voneinander getrennt. Über den Ventilstößel 10, der sich durch eine Bohrung des Gehäuseteils 9 hindurch erstreckt, erfolgt eine Übertragung einer Bewegung und/oder Kraft zwischen den Ventilteilen 6, 7.

In dem Ventilteil 6 ist ein Anker 13 entlang einer Längsachse 14 verschieblich. Der Anker 13 ist über eine Bohrung mittels einer Presspassung fest mit dem Ventilstößel 10 verbunden. Der Anker 13 steht in elektromagnetischer Wechselwirkung mit dem Haftmagnet 15. Der Haftmagnet 15 weist eine Spule 16 und einen Kern 17 auf. Die Bestromung der Spule 16 wird mittels einer Steuereinheit gesteuert, die integraler Bestandteil der Agrarspritzen-Ventileinheit 1 sein kann oder die extern hiervon angeordnet ist und über einen Steueranschluss der Agrarspritzen-Ventileinheit 1 mit dieser kommuniziert.

In der Schließstellung der Agrarspritzen-Ventileinheit 1 befindet sich der Anker 13 in der Haft- und Haltestellung, in der der Anker 13 an dem Haftmagnet 15 und insbesondere dem Kern 17 anliegt. In dieser Haft-, Halte- und Schließstellung kann der Anker 13 mit einer minimalen elektrischen Leistungsaufnahme der Spule 16 gehalten werden.

Der Anker 13 verfügt über einen Fortsatz 18 mit zylindrischer Mantelfläche, die in einer entsprechenden zentralen Sacklochbohrung des Gehäuseteils 9 gleitend geführt ist. Durch den Boden der Sacklochbohrung des Gehäuseteils 9 erstreckt sich die Bohrung, durch welche sich wiederum der Ventilstößel 10 erstreckt.

Das Gehäuseteil 9 begrenzt gemeinsam mit einem Anschlussteil 19, deren Stirnseiten im radial außenliegenden Bereich über ein Dichtelement 20 abgedichtet sind, einen Aufnahmeraum 21 für die im Folgenden angeführten Ventilelemente. In den Aufnahmeraum 21 münden die Primärleitung 2 und die Sekundärleitung 3, die sich durch das Anschlussteil 19 erstrecken.

In dem Aufnahmeraum 21 befindet sich ein Gehäuseteil 22. Das Gehäuseteil 22 weist eine abgestufte Innenbohrung auf, durch die sich der Ventilstößel 10 erstreckt. Zwischen den Gehäuseteilen 9, 22 ist ein Ringraum 23 gebildet. In den Ringraum 23 mündet die Primärleitung 2 ein. Ein axialer Endbereich des Gehäuseteils 22 ist radial und axial an dem Gehäuseteil 9 abgestützt, während der andere axiale Endbereich an dem Anschlussteil 19 abgestützt ist, womit das Gehäuseteil 22 koaxial zu der Längsachse 14 in der Agrarspritzen-Ventileinheit 1 fixiert ist.

In dem Ringraum 23 ist verschieblich in Richtung der Längsachse 14 ein Überströmventilkolben 24 geführt. Der Überströmventilkolben 24 ist radial außenliegend über ein Dichtelement 25 gegenüber einer Innenfläche des Gehäuseteils 9 abgedichtet. Radial innenliegend ist der Überströmventilkolben 24 über Dichtelemente 26, 40 gegenüber dem Gehäuseteil 22 abgedichtet. Eine Überströmventilfeder 27 beaufschlagt den Überströmventilkolben 24 in Richtung eines Überströmventilsitzes 28, der von einem Ringbund oder Kragen des Gehäuseteils 22 ausgebildet ist.

Ein Innenraum 29 des Gehäuseteils 22 ist mit der Sekundärleitung 3 verbunden. In dem Innenraum 29 trägt der Ventilstößel 10 in einem Endbereich einen Betätigungskörper 30, der insbesondere über eine Presspassung einer koaxial zur Längsachse 14 orientierten Durchgangsbohrung fest mit dem Ventilstößel 10 verbunden ist. Wie im Folgenden noch näher erläutert wird, trägt der Betätigungskörper 30 einen Ventilkörper 31 des Steuerventils 5. Das Gehäuseteil 22 bildet radial innenliegend einen Ventilsitz 32 des Steuerventils 5 aus, der in der Schließstellung gemäß Fig. 1 unter Abdichtung durch den Ventilkörper 31 verschlossen ist. In dieser Schließstellung unterteilt das Steuerventil 5 den Innenraum 29 in eine Einlasskammer 33 und eine Auslasskammer 34. Das Gehäuseteil 22 verfügt über radiale Bohrungen 35, über die der Ringraum 23 auf der den Dichtelementen 25, 26 bei Blickrichtung von der Primärleitung 2 abgewandten Seite mit der Einlasskammer 33 verbunden ist. Die Bohrungen 35 sind axial zwischen dem Dichtelement 26 bzw. dem Steuerventil 5 und dem Dichtelement 40 angeordnet.

Eine Steuerventilfeder 36 beaufschlagt den Betätigungskörper 30 in Richtung der Öffnungsstellung. In der in Fig. 1 dargestellten Schließstellung hält der Haftmagnet 15 entgegen der Beaufschlagung durch die Steuerventilfeder 36 den Betätigungskörper 30 mit dem Ventilkörper 31 in der Schließstellung. Eine Abdichtung der Einlasskammer 33 in Richtung des Ventilteils 6 erfolgt über die Membran 12, die radial innenliegend gegenüber dem Ventilstößel 10 abgedichtet ist und radial außenliegend unter Gewährleistung einer Dichtwirkung zwischen den Gehäuseteilen 9, 22 eingespannt ist.

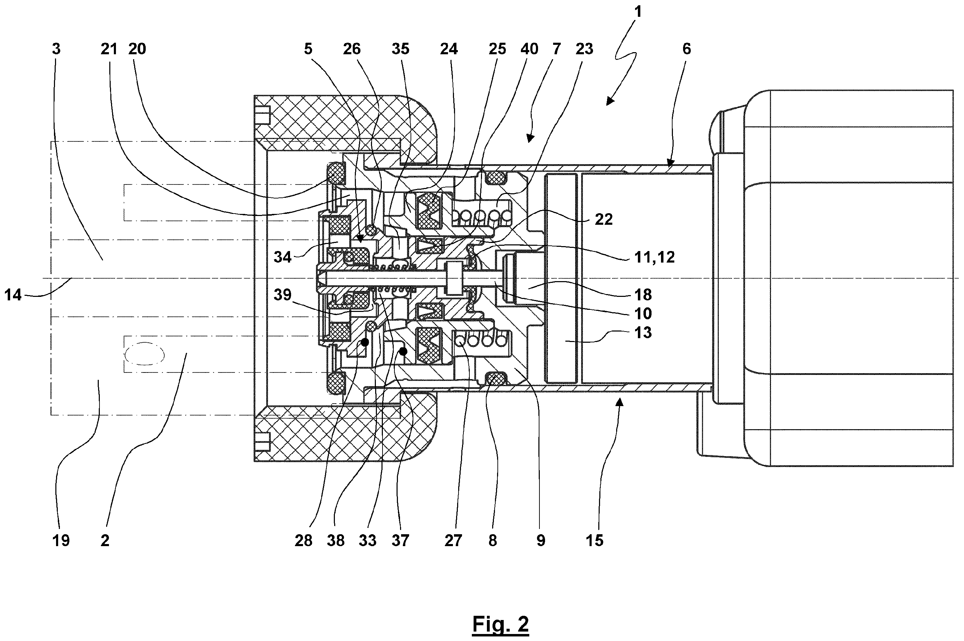

Die Funktionsweise der Agrarspritzen-Ventileinheit 1 ist wie folgt:
In der in Fig. 1 dargestellten Schließstellung, die durch Bestromung des Haftmagneten 15 und hierdurch bedingte Anlage des Ankers 13 an dem Haftmagneten 15 herbeigeführt und aufrechterhalten wird, sind zunächst das Überströmventil 4 und das Steuerventil 5 geschlossen. Der mit der Aufnahme des Betriebs ansteigende Druck in der Primärleitung 2 beaufschlagt eine kreisringförmige Kolbenfläche 37. Der Innendurchmesser der Kolbenfläche 37 ist vorgegeben durch den Kontakt des Dichtelements 26 mit dem Gehäuseteil 22. Der Außendurchmesser der Kolbenfläche 37 ist vorgegeben durch den Kontakt des Dichtelements 25 mit der Innenfläche des Gehäuseteils 9. Erzeugt der Druck in der Primärleitung eine Kraft an der Kolbenfläche 37, die größer ist als die Beaufschlagung des Überströmventilkolbens 24 durch die Überströmventilfeder 27, gleitet der Überströmventilkolben 24 weg von dem Überströmventilsitz 28, wodurch zwischen dem Überströmventilsitz 28 und dem Überströmventilkolben 24 ein Übertrittsquerschnitt 38 geschaffen wird. Über diesen Übertrittsquerschnitt 38 kann dann Fluid von der Primärleitung 2 über die Bohrungen 35 in die Einlasskammer 33 gelangen. Mit der Schaffung des Übertrittsquerschnitts 38 wirkt der Druck in der Primärleitung 2 auf eine vergrößerte Kolbenfläche des Überströmventil Kolbens 24 ein, womit eine Art Hysterese herbeigeführt werden kann oder eine zuverlässige Beibehaltung der Öffnungsstellung des Überströmventils 4 gewährleistet werden kann. Wird weiterhin mittels des Haftmagneten 17 das Steuerventil 5 in der Schließstellung gehalten, kann das Fluid (trotz des geöffneten Überströmventils 4) noch nicht von der Einlasskammer 33 in die Auslasskammer 34 und von hier zu der Sekundärleitung 3 strömen. Erst mit Reduzierung oder Beseitigung der Bestromung der Spule 16 des Haftmagneten 15 kann die Steuerventilfeder 36 den Ventilkörper 31 von dem Ventilsitz 32 weg bewegen, womit sich ein Übertrittsquerschnitt 39 des Steuerventils 5 zwischen dem Ventilkörper 31 und dem Ventilsitz 32 ergibt (s. Fig. 2). Das Fluid kann dann von der Primärleitung 2 über den Übertrittsquerschnitt 38 des Überströmventils 4, die Bohrungen 35, die Einlasskammer 33, den Übertrittsquerschnitt 39 zu der Auslasskammer 34 und der Sekundärleitung 3 strömen.

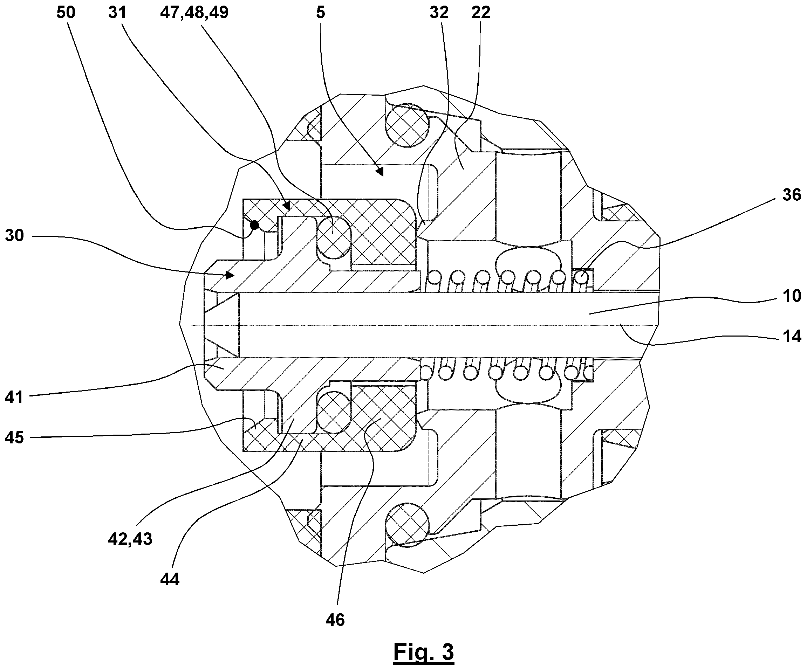

**Fig. 3** zeigt das Steuerventil 5 in einem Detail in einem Längsschnitt. Zu erkennen ist, dass der Betätigungskörper einen Hülsenteil 41 und einen von dem Hülsenteil 41 radial nach außenstehenden Vorsprung 42, der hier als umlaufender Ringbund oder -kragen 43 ausgebildet ist, aufweist. Das Hülsenteil 41 ist mit seiner Innenbohrung über eine Presspassung an dem Ventilstößel 10 fixiert.

Der Ventilkörper 31 umgibt radial außenliegend den Ringbund 43 und schließt diesen axial ein. In einem Halblängsschnitt ist der Ventilkörper 31 U-förmig ausgebildet mit einem Grundschenkel 44 und zwei Seitenschenkeln 45, 46, wobei der Seitenschenkel 45 kürzer ist als der Seitenschenkel 46, aber der Seitenschenkel 45 eine kleinere Erstreckung in axialer Richtung hat als der Seitenschenkel 46. Zwischen dem Ringbund 43 und dem Seitenschenkel 46 ist ein Federelement 47 angeordnet, welches für das dargestellte Ausführungsbeispiel auch ein Dichtelement 48 ist. Das Dicht- und Federelement 47, 48 ist hier ein O-Ring 49. Während bei einer Erzeugung einer Haft- oder Haltekraft durch den Haftmagneten 17, die kleiner ist als die Federkraft der Steuerventilfeder 36, ohne oder mit Vorspannung des O-Rings 49 der Ringbund 43 an dem Seitenschenkel 45 anliegen kann, führt die Erzeugung einer Haft- oder Haltekraft durch den Haftmagneten 17, die größer ist als die Federkraft der Steuerventilfeder 36, dazu, dass der Ringbund 43 den O-Ring 49 axial komprimiert, womit sich, wie in Fig. 3 dargestellt, der Ringbund 43 von dem Seitenschenkel 45 entfernt. Die Übertragung der Haft- oder Haltekraft erfolgt von dem Anker über dem Ventilstößel 10, den Betätigungskörper 30, den O-Ring 49 zu dem Ventilkörper 31, der dann gegen den Ventilsitz 32 gepresst wird.

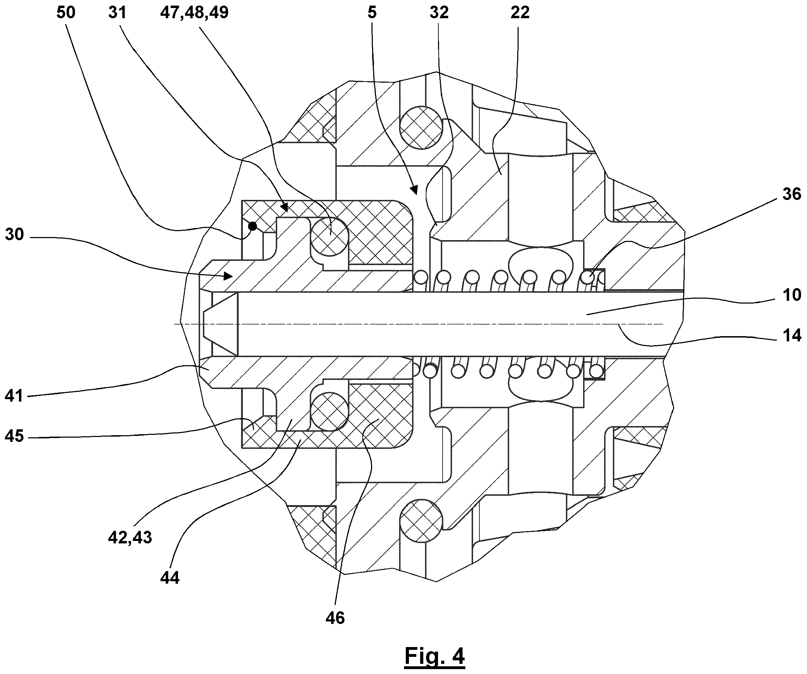

Mit der Reduzierung der Bestromung der Spule 16 des Haftmagneten 15 kann die Steuerventilfeder 36 den Anker 13, den Ventilstößel 10, den Betätigungskörper 30, den O-Ring 49 und den Ventilkörper 31 von dem Ventilsitz 32 weg bewegen, womit sich der O-Ring 49 teilweise entspannen kann und die verbleibende Vorspannung des O-Rings 49 dazu führt, dass der Ringbund 43 gegen den Seitenschenkel 45 gedrückt wird (s. **Fig. 4**).

Für eine Montage wird zunächst der O-Ring 49 in den Ventilkörper 31 eingelegt. Hieran anschließend wird der Ventilkörper 31 von der der Steuerventilfeder 36 zugewandten Seite an den Ringbund 43 angenähert, womit der Seitenschenkel 45 zur Anlage an den Ringbund 43 kommt. Der Seitenschenkel 45 verfügt über eine Montageschräge 50. Auf den Ventilkörper 31 aufgebrachte Montagekräfte führen an der Montageschräge 50 zu der Erzeugung einer Kraftkomponente, die den Seitenschenkel 45 radial aufweitet, was durch elastische Verformung des Grundschenkels 44 und/oder des Seitenschenkels 45 erfolgen kann. Mit hinreichender radialer Aufweitung kann dann der Seitenschenkel 45 den Ringbund 43 passieren und hinter diesen schnappen, womit der Ringbund 43 und der O-Ring 49 zwischen den Seitenschenkeln 45, 46 des Ventilkörpers 31 gefangen sind.

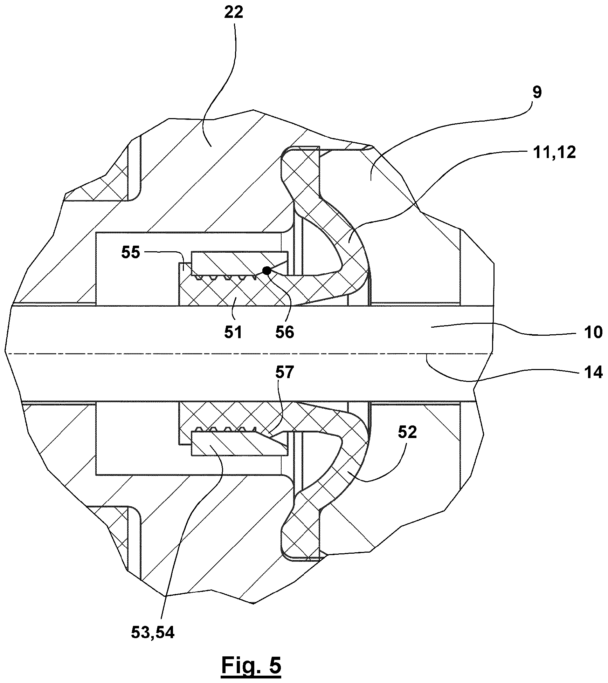

**Fig. 5** zeigt die Membran 12. Die Membran 12 verfügt über eine Verbindungshülse 51, durch welche sich der Ventilstößel 10 erstreckt. Des Weiteren verfügt die Membran 12 über ein gewölbtes ringförmiges Membranteil 52, welches radial innenliegend in die Verbindungshülse 51 übergeht und radial außenliegend zwischen den Gehäuseteilen 9, 22 eingespannt ist. Die Fixierung und Abdichtung der Verbindungshülse 51 gegenüber dem Ventilstößel 10 erfolgt durch radiales Verspannen der Verbindungshülse 51 zwischen einem Klemmkörper 53, der hier als Klemmhülse 54 ausgebildet ist. Die Klemmhülse 54 ist in die eine Richtung axial abgestützt an einem Ringbund 55 der Verbindungshülse 51 sowie in dem anderen axialen Endbereich in die andere axiale Richtung mit einer Fase 56 der Klemmhülse 54 an einem umlaufenden Kragen 57 der Verbindungshülse 51, der eine kegelstumpfförmige Abstützfläche ausbildet, deren Öffnungswinkel dem Öffnungswinkel der Fase 56 entspricht. Für eine Montage wird die Klemmhülse 54 von der Seite des Ringbunds 55 auf die Verbindungshülse 51 aufgeschoben. Die Fase 56 komprimiert dabei den Ringbund 55, bis die Klemmhülse 54 über den Ringbund 55 gleiten kann. In der in Fig. 5 dargestellten Endstellung schnappt der Ringbund 55 elastisch wieder nach außen, womit die Klemmhülse 54 zwischen dem Ringbund 55 und dem Kragen 57 gefangen ist. Die Verbindungshülse 51 verfügt über ein Übermaß derart, dass die Verbindungshülse 51 durch die Klemmhülse 54 so komprimiert ist, dass die erforderliche Dichtwirkung und die Fixierung herbeigeführt wird.

Optional möglich ist, dass die Verbindungshülse 51 im Kontaktbereich mit der Innenfläche der Klemmhülse 54 Ringnuten aufweist, die die Kontaktbedingungen und die dynamischen Eigenschaften der Klemmverbindung verbessern können.

Für eine bevorzugte Ausführungsform entspricht der Radius des Ventilsitzes 32 dem Radius des O-Rings 49 oder die Radien weichen maximal um ± 20 %, maximal um ± 10 %, maximal um ± 5 % oder maximal um ± 2 % voneinander ab. Dies hat zur Folge, dass der in der Einlasskammer 33 wirkende Druck auf beiden Seiten des Seitenschenkels 46 auf (ungefähr) dieselbe Ringfläche des Ventilkörpers 31 einwirkt, so dass sich die durch diesen Druck ausgeübten Kräfte weitestgehend oder vollständig aufheben. Dies vermeidet ein Verklemmen des Ventilkörpers 31 und verringert die Beanspruchung desselben.

Der Ventilkörper 31 ist durch den Ventilsitz 32 lediglich mit den Kontaktkräften, die eine Normalkraft bilden, beaufschlagt. Von dem O-Ring 49 ist der Ventilkörper 31 ebenfalls lediglich im Bereich einer Kreisringfläche mit einer Anpress- und Normalkraft beaufschlagt. Der O-Ring 49 wird mit seiner Einfederung vorrangig mittels einer Walkbewegung beaufschlagt.

### BEZUGSZEICHENLISTE

- 1: Agrarspritzen-Ventileinheit
- 2: Primärleitung
- 3: Sekundärleitung
- 4: Überströmventil
- 5: Steuerventil
- 6: Ventilteil
- 7: Ventilteil
- 8: Dichtelement
- 9: Gehäuseteil
- 10: Ventilstößel
- 11: Dichtelement
- 12: Membran
- 13: Anker
- 14: Längsachse
- 15: Haftmagnet
- 16: Spule
- 17: Kern
- 18: Fortsatz
- 19: Anschlussteil
- 20: Dichtelement
- 21: Aufnahmeraum
- 22: Gehäuseteil
- 23: Ringraum
- 24: Überströmventilkolben
- 25: Dichtelement
- 26: Dichtelement
- 27: Überströmventilfeder
- 28: Überströmventilsitz
- 29: Innenraum
- 30: Betätigungskörper
- 31: Ventilkörper
- 32: Ventilsitz
- 33: Einlasskammer
- 34: Auslasskammer
- 35: Bohrung
- 36: Steuerventilfeder
- 37: Kolbenfläche
- 38: Übertrittsquerschnitt (Überströmventil)
- 39: Übertrittsquerschnitt (Steuerventil)
- 40: Dichtelement
- 41: Hülsenteil
- 42: Vorsprung
- 43: Ringbund
- 44: Grundschenkel
- 45: Seitenschenkel
- 46: Seitenschenkel
- 47: Federelement
- 48: Dichtelement
- 49: O-Ring
- 50: Montageschräge
- 51: Verbindungshülse
- 52: Membranteil
- 53: Klemmkörper
- 54: Klemmhülse
- 55: Ringbund
- 56: Fase
- 57: Kragen

## Patentansprüche

1. Agrarspritzen-Ventileinheit (1) mit
a) einer Primärleitung (2),
b) einer Sekundärleitung (3),
c) einem Steuerventil (5), welches zwischen der Primärleitung (2) und der Sekundärleitung (3) angeordnet ist und einen gehäusefesten Ventilsitz (32) und einen bewegten Ventilkörper (31) aufweist, der in einer Öffnungsstellung einen Übertrittsquerschnitt (39) mit dem Ventilsitz (32) ausbildet und in einer Schließstellung den Ventilsitz (32) verschließt und
d) einem elektronisch gesteuerten Haftmagneten (15), der eine Betriebsstellung des Ventilkörpers (31) aufrecht erhält und/oder verändert,
**dadurch gekennzeichnet, dass**
e) der Ventilkörper (31) aus Kunststoff hergestellt ist und
f) in dem Kraftfluss zwischen einem Anker (13) des Haftmagneten (15) und dem Ventilkörper (31) ein Federelement (47) angeordnet ist, dessen Steifigkeit kleiner ist als die Steifigkeit des Ventilkörpers (31).

2. Agrarspritzen-Ventileinheit (1) nach Anspruch 1, **dadurch gekennzeichnet, dass** ein Federfußpunkt des Federelements (47) an dem Ventilkörper (31) abgestützt ist und der andere Federfußpunkt des Ventilkörpers (31) an einem Betätigungskörper (30) abgestützt ist, der mechanisch mit dem Anker (13) des Haftmagneten (15) verbunden ist.

3. Agrarspritzen-Ventileinheit (1) nach Anspruch 1 oder 2, **dadurch gekennzeichnet, dass** der Ventilkörper (31) aus Polyethylen oder PTFE hergestellt ist und insbesondere eine Härte aufweist, die mindestens 55 Shore D beträgt.

4. Agrarspritzen-Ventileinheit (1) nach Anspruch 2 oder Anspruch 3 in Rückbeziehung auf Anspruch 2, **dadurch gekennzeichnet, dass** das Federelement (31) ein Dichtelement (48) ist, welches eine Abdichtung zwischen dem Ventilkörper (31) und dem Betätigungskörper (30) gewährleistet.

5. Agrarspritzen-Ventileinheit (1) nach Anspruch 4, **dadurch gekennzeichnet, dass** das Feder- und/oder Dichtelement (47, 48) als O-Ring (49) ausgebildet ist.

6. Agrarspritzen-Ventileinheit (1) nach Anspruch 5, **dadurch gekennzeichnet, dass** der O-Ring (49) aus einem Elastomermaterial, Santopren oder Polypropylen hergestellt ist.

7. Agrarspritzen-Ventileinheit (1) nach einem der Ansprüche 4 bis 6, **dadurch gekennzeichnet, dass**
a) in einem Halblängsschnitt
aa) der Betätigungskörper (30) einen radialen Vorsprung (42) aufweist und
ab) der Ventilkörper (31) den radialen Vorsprung (42) U-förmig von außen umgreift,
b) wobei
ba) ein Grundschenkel (44) des U radial außenliegend von dem Vorsprung (42) angeordnet ist,
bb) der radiale Vorsprung (42) axial zwischen den beiden Seitenschenkeln (45, 46) des U gefangen ist und
bc) das Feder- und/oder Dichtelement (47, 48) zwischen einem Seitenschenkel (46) und dem radialen Vorsprung (42) angeordnet ist

8. Agrarspritzen-Ventileinheit (1) nach Anspruch 7, **dadurch gekennzeichnet, dass** der Ventilkörper (31) unter elastischer Verformung mit dem Betätigungskörper (30) montierbar ist oder auf diesen aufgeklippst ist.

9. Agrarspritzen-Ventileinheit (1) nach Anspruch 8, **dadurch gekennzeichnet, dass** ein Seitenschenkel (45) des U im Endbereich eine Montageschräge (50) aufweist, welche mit einem spitzen Winkel gegenüber der Längsachse (14) geneigt ist.

10. Agrarspritzen-Ventileinheit (1) nach Anspruch 4 oder einem der Ansprüche 5 bis 9 in Rückbeziehung auf Anspruch 4, **dadurch gekennzeichnet, dass** der Betätigungskörper (30) über einen Ventilstößel (10) mechanisch mit dem Anker (13) des Haftmagneten (15) verbunden ist und der Anker (13) über eine Membran (12) gegenüber einem Gehäuseteil (9; 22) abgedichtet ist.

11. Agrarspritzen-Ventileinheit (1) nach Anspruch 10, **dadurch gekennzeichnet, dass** die Membran (12) radial innenliegend eine Verbindungshülse (51) ausbildet, welche in einem Klemmkörper (53) angeordnet ist, welcher die Verbindungshülse (51) zwischen dem Klemmkörper (53) und dem Ventilstößel (10) radial verspannt.

12. Agrarspritzeinrichtung mit mehreren Agrarspritzen-Ventileinheiten (1) nach einem der Ansprüche 1 bis 11, welchen jeweils eine Ausbringdüse zugeordnet ist und die mit den zugeordneten Ausbringdüsen an einem Sprühbalken gehalten sind und über eine Pumpe mit einem auszubringenden Fluid versorgt werden, und mit mindestens einer elektronischen Steuereinheit, die mindestens eine Agrarspritzen-Ventileinheit (1) ansteuert.

## Claims

1. Agricultural sprayer valve unit (1) with
a) a primary conduit (2),
b) a secondary conduit (3),
c) a control valve (5), which is arranged between the primary conduit (2) and the secondary conduit (3) and comprises a valve seat (32) fixed to the housing and a moving valve body (31) that in an open position forms a transition cross-section (39) with the valve seat (32) and in a closed position closes the valve seat (32) and
d) an electronically controlled holding solenoid (15) that maintains and/or changes an operating position of the valve body (31),
**characterised in that**
e) the valve body (31) is made of plastic and
f) a spring element (47) whose stiffness is less than the stiffness of the valve body (31) is arranged in the force flow between an armature (13) of the holding solenoid (15) and the valve body (31).

2. Agricultural sprayer valve unit (1) according to claim 1, **characterised in that** one spring base of the spring element (47) is supported on the valve body (31) and the other spring base of the valve body (31) is supported on an actuating body (30) that is mechanically connected to the armature (13) of the holding solenoid (15).

3. Agricultural sprayer valve unit (1) according to claim 1 or 2, **characterised in that** the valve body (31) is made from polyethylene or PTFE and particularly has a hardness that is at least 55 Shore D.

4. Agricultural sprayer valve unit (1) according to claim 2 or claim 3 with reference back to claim 2, **characterised in that** the spring element (31) is a sealing element (48), which ensures a sealing effect between the valve body (31) and the actuating body (30).

5. Agricultural sprayer valve unit (1) according to claim 4, **characterised in that** the spring and/or sealing element (47, 48) is embodied as an O-ring (49).

6. Agricultural sprayer valve unit (1) according to claim 5, **characterised in that** the O-ring (49) is made from an elastomeric material, santoprene or polypropylene.

7. Agricultural sprayer valve unit (1) according to one of the claims 4 to 6, **characterised in that**
a) in a half longitudinal section
aa) the actuating body (30) comprises a radial projection (42) and
ab) the valve body (31) embraces the radial projection (42) with an U-shape from the outside
b) whereby
ba) a base leg (44) of the U is arranged radially external of the projection (42),
bb) the radial projection (42) is axially trapped between the two side legs (45, 46) of the U and
bc) the spring and/or sealing element (47, 48) is arranged between a side leg (46) and the radial projection (42)

8. Agricultural sprayer valve unit (1) according to claim 7, **characterised in that** the valve body (31) can be mounted with the actuating body (30) under elastic deformation or is clipped onto it.

9. Agricultural sprayer valve unit (1) according to claim 8, **characterised in that** a side leg (45) of the U comprises a mounting bevel (50) in the end region, the mounting bevel (50) being inclined at an acute angle relative to the longitudinal axis (14).

10. Agricultural sprayer valve unit (1) according to claim 4 or one of claims 5 to 9 with reference back to claim 4, **characterised in that** the actuating body (30) is mechanically connected to the armature (13) of the holding solenoid (15) via a valve plunger (10) and the armature (13) is sealed against a housing part (9; 22) via a diaphragm (12).

11. Agricultural sprayer valve unit (1) according to claim 10, **characterised in that** on the radial inner side the diaphragm (12) forms a connecting sleeve (51), which is arranged in a clamping body (53), which radially clamps the connecting sleeve (51) between the clamping body (53) and the valve plunger (10).

12. Agricultural spray device with a plurality of agricultural sprayer valve units (1) according to one of the claims 1 to 11, to each of which an application nozzle is assigned and which are held with the assigned application nozzles on a sprayer boom and are supplied with a fluid to be applied via a pump, and with at least one electronic control unit which controls at least one agricultural sprayer valve unit (1).

## Revendications

1. Unité de soupape de pulvérisation agricole (1) avec
a) une conduite principale (2),
b) une conduite secondaire (3),
c) une soupape de commande (5) qui est disposée entre la conduite principale (2) et la conduite secondaire (3) et qui comprend un siège de soupape (32) solidaire du boîtier et un corps de soupape mobile (31) qui, dans une position d'ouverture, forme une section transversale de débordement (39) avec le siège de soupape (32) et, dans une position de fermeture, obture le siège de soupape (32) et
d) un aimant de fixation (15) contrôlé électroniquement, qui maintient et/ou modifie une position de fonctionnement du corps de soupape (31),
**caractérisée en ce que**
e) le corps de soupape (31) est constitué d'une matière plastique et
f) dans le flux de force entre un ancrage (13) de l'aimant de fixation (15) et le corps de soupape (31), est disposé un élément à ressort (47), dont la rigidité est inférieure à la rigidité du corps de soupape (31).

2. Unité de soupape de pulvérisation agricole (1) selon la revendication 1, **caractérisée en ce qu'**une base du ressort de l'élément à ressort (47) s'appuie contre le corps de soupape (31) et l'autre base du ressort du corps de soupape (31) s'appuie contre un corps d'actionnement (30) qui est relié mécaniquement avec l'ancrage (13) de l'aimant de fixation (15).

3. Unité de soupape de pulvérisation agricole (1) selon la revendication 1 ou 2, **caractérisée en ce que** le corps de soupape (31) est constitué de polyéthylène ou de PTFE et présente plus particulièrement une dureté qui est égale à au moins 55 Shore D.

4. Unité de soupape de pulvérisation agricole (1) selon la revendication 2 ou la revendication 3, en référence à la revendication 2, **caractérisée en ce que** l'élément à ressort (31) est un élément d'étanchéité (48) qui assure une étanchéité entre le corps de soupape (31) et le corps d'actionnement (30).

5. Unité de soupape de pulvérisation agricole (1) selon la revendication 4, **caractérisée en ce que** l'élément à ressort et/ou d'étanchéité (47, 48) est conçu comme un joint torique (49).

6. Unité de soupape de pulvérisation agricole (1) selon la revendication 5, **caractérisée en ce que** le joint torique (49) est constitué d'un matériau de type élastomère, de santoprène ou de polypropylène.

7. Unité de soupape de pulvérisation agricole (1) selon l'une des revendications 4 à 6, **caractérisée en ce que**
a) dans une coupe semi-longitudinale
aa) le corps d'actionnement (30) présente une saillie radiale (42) et
ab) le corps de soupape (31) entoure la saillie radiale (42) de l'extérieur en forme de U
b) dans laquelle
ba) une branche de base (44) du U est disposée radialement à l'extérieur de la saillie (42),
bb) la saillie radiale (42) est coincée axialement entre les deux branches latérales (45, 46) du U et
bc) l'élément à ressort et/ou d'étanchéité (47, 48) est disposé entre une branche latérale (46) et la saillie radiale (42).

8. Unité de soupape de pulvérisation agricole (1) selon la revendication 7, **caractérisée en ce que** le corps de soupape (31) peut être monté, grâce à une déformation élastique, avec le corps d'actionnement (30) ou peut être clipsé sur celui-ci.

9. Unité de soupape de pulvérisation agricole (1) selon la revendication 8, **caractérisée en ce qu'**une branche latérale (45) du U présente, dans la partie d'extrémité, un chanfrein de montage (50) qui est incliné avec un angle aigu par rapport à l'axe longitudinal (14).

10. Unité de soupape de pulvérisation agricole (1) selon la revendication 4 ou l'une des revendications 5 à 9, en référence à la revendication 4, **caractérisée en ce que** le corps d'actionnement (30) est relié mécaniquement avec l'ancrage (13) de l'aimant de fixation (15) par l'intermédiaire d'un coulisseau de soupape (10) et l'ancrage (13) est étanchéifié par l'intermédiaire d'une membrane (12) vis-à-vis d'une partie du boîtier (9 ; 22).

11. Unité de soupape de pulvérisation agricole (1) selon la revendication 10, **caractérisée en ce que** la membrane (12) forme radialement, à l'intérieur, une douille de liaison (51) qui est disposée dans un corps de serrage (53) qui serre radialement la douille de liaison (51) entre le corps de serrage (53) et le coulisseau de soupape (10).

12. Dispositif de pulvérisation agricole avec plusieurs unités de soupapes de pulvérisation agricole (1) selon l'une des revendications 1 à 11, auxquelles correspond respectivement une buse de distribution et qui sont maintenues, avec les buses de distribution, sur une barre de pulvérisation et qui sont alimentées, par l'intermédiaire d'une pompe, avec un fluide à distribuer, et avec au moins une unité de commande électronique qui contrôle au moins une unité de soupape de pulvérisation agricole (1).
